# EUROPEAN PATENT SPECIFICATION

(11) **EP 2 918 449 B1**
(45) Date of publication and mention of the grant of the patent: **16.08.2017**
(21) Application number: 14159506.6
(22) Date of filing: 13.03.2014
(51) Int. Cl.: B60R 5/04

(54) **COVER SYSTEM FOR COVERING A LUGGAGE OR TRUNK SPACE OF A MOTOR VEHICLE, AND ESPECIALLY OF A HATCHBACK OR STATION WAGON AUTOMOBILE**
ABDECKSYSTEM ZUM ABDECKEN EINES GEPÄCK- ODER KOFFERRAUMS EINES KRAFTFAHRZEUGS, INSBESONDERE FÜR EINEN FLIESSHECK- ODER KOMBIWAGEN
SYSTÈME DE COUVERTURE POUR RECOUVRIR UN ESPACE DANS LE COFFRE OU POUR LES BAGAGES D'UN VÉHICULE AUTOMOBILE ET NOTAMMENT D'UNE AUTOMOBILE DE TYPE BREAK OU À HAYON

(43) Date of publication of application: 16.09.2015
(73) Proprietor: Volvo Car Corporation, 40531 Göteborg (SE)
(72) Inventor: Bergdahl, Magnus, 44231 Kungälv (SE); Hörnström, Urban, 46144 Trollhättan (SE)
(74) Representative: Volvo Car Corporation

(56) References cited:
- DE-A1- 19 906 648
- DE-A1-102005 035 271
- DE-A1-102006 009 771
- JP-A- S60 244 646
- JP-A- 2005 075 247

## Description

### Technical field

Embodiments herein relate to a cover system for covering a confined space open at the top, and delimited by a floor, a pair of side walls, a hatch and one or more backrests of a row of vehicle seats, particularly a luggage or trunk space of a motor vehicle, and especially of a hatchback or station wagon automobile, as well as a vehicle that comprises such a cover system.

### Background

Motor vehicles, such as hatchbacks and station wagon automobiles, small vans and the like frequently have loading or storage spaces, e.g. luggage or trunk spaces, behind the rear seats of the vehicles. Such spaces may be visible from the outside, in particular if the vehicles have windows above such spaces, which visibility many vehicle owners find undesirable, e.g. for safety related reasons. No fixed covers are usually provided over such storages spaces in vehicles of the above mentioned types. This, as fixed covers would interface with placement of tall articles in the storage spaces.

However, covers for the storage spaces are known which are attached to rear or back portions of the rear seats of the vehicle or close thereto on the vehicle frames. Such covers are then usually rolled up on rollers and can then be pulled out across the storage spaces to block the views there into.

Covers of the above type use, usually, spring-loaded rollers, similar to window shades and having cover webs which extends across the storage space. Such cover webs, however, in order to be sufficiently flexible, usually cannot accept placement of any articles thereupon. Sometimes even the own weight of the cover web of such a cover will cause it to sag, particularly in central portions of the cover web. Thus, such cover webs are highly sensitive with respect to articles or loading placed thereupon.

Another covering device for a motor vehicle's cargo space, according to document DE 10 2006 009 771, which shows the preamble of claim 1, comprises at least a first and a second rigid plate, which are slidably arranged in two guide means which are attached to two opposite side walls of the cargo space, wherein a first guide means is attached to one side wall and the other guide means is attached to the opposite side wall. The guide means may comprise grooves, and the first and / or second plate may be provided with engaging means attached to lateral edges of the plates, the engaging means engaged with the grooves. The guide means may have deflecting means, by which the cover can be brought to a position behind a back of a back seat of the vehicle and/or disposed substantially parallel to the backrest. The cover may further have joints that permit a pivoting of the second plate to the first plate, in an upward direction.

### Summary

Embodiments herein aim to provide an improved cover system for covering a confined space open at the top, and delimited by a floor, a pair of side walls, a hatch and one or more backrests of a row of vehicle seats, particularly a luggage or trunk space of a motor vehicle.

This is provided through a system as in claim 1. The provision of a two panel cover element slidably receivable in guide rails arranged as above by guide elements provides for a cover system where the cover element is readily removable from the vehicle, or displaceable in the guide rails therein, to permit carrying of large or bulky loads, and where the cover element can be readily replaced following removal thereof, and which cover element, when retained by the guide rails, is capable of sustaining some load thereupon without sagging. Further, the provision of the respective first openings and the hinge portion, by which the two panels are coupled to each other, enables selective partial opening of the cover element through folding the second panel upwardly when the cover element is held by the guide rails above the top of the confined space.

The provision of having the size of the first panel correspond to the area behind the backrests between the second guide rail sections enables a further selective partial opening of the cover element through translating the cover element when held by the guide rails such that the first panel becomes placed between the second guide rail sections adjacent the backrests of the vehicle seats. Hereby the top of the confined space will only be partially covered by the second panel of the cover element.

The provision of having the pairs of guide elements arranged as above facilitates controlled translation of the cover element, when held by the guide rails, while at the same time allowing selective removal of the pair of guide elements of the second panel trough the respective first openings for partial opening of the cover element through folding the second panel upwardly when the cover element is held by the guide rails above the top of the confined space.

According to a second aspect is provided that each guide rail has a respective second opening, facing in towards the confined space, for receipt / removal of one or more pairs of guide elements adjacent the respective ends of the guide rails at the hatch.

The provision of the second openings as above enables selective receipt / removal of one or more pairs of guide elements through these openings, which facilitates flexible reconfiguration of the cover panels of the cover system, such as folding of the second panel into the confined space.

According to a third aspect is provided that each guide rail has a respective third opening, facing out of the confined space, for receipt / removal of one or more pairs of guide elements at ends of the second guide rail sections adjacent the first guide rail sections.

The provision of the third openings as above enables selective receipt / removal of one or more pairs of guide elements through these openings, which facilitates flexible reconfiguration of the cover panels of the cover system, such as removal of the pair of second guide elements and the pair of third guide elements and subsequent folding of the panels out over the backrests of the row of vehicle seats when these have been folded down to further increase the storage and cargo space of the vehicle.

According to a fourth aspect is provided that each guide rail has a respective fourth opening, facing in towards the confined space, for receipt / removal of a pair of guide elements at the second guide rail sections.

The provision of the fourth openings as above enables selective receipt / removal of one or more pairs of guide elements through these openings, which facilitates flexible reconfiguration of the cover panels of the cover system, such as release of the pair of first guide elements into the confined space.

According to a fifth aspect is provided that each guide rail has a respective first retaining element, which first retaining elements are arranged to selectively receive and releasably retain a pair of guide elements, removed through the fourth openings, in positions adjacent the sides of the second guide rail sections facing in towards the confined space.

The provision of the first retaining elements as above enables retention of the pair of first guide elements upon removal thereof through the fourth openings, whereby the cover panels of the cover system e.g. can be reconfigured to form a shelf through the pair of second guide elements previously being released into the confined space and the first panel being suspended from the first guide rail sections by the second panel, which in turn is supported therein by the third guide elements, or alternatively reconfigured to form a box through the pair of second guide elements previously being released into the confined space and the first panel being supported at the floor by the second panel, which has been folded vertically along the hinge section following removal of the third guide elements into the confined space through the second openings.

According to an sixth aspect is provided that each guide rail has a respective second retaining element, which second retaining elements are arranged to selectively receive and releasably retain a pair of guide elements in positions adjacent sides of the second guide rail sections facing in towards the confined space.

The provision of the second retaining elements as above enables retention of the pair of third guide elements upon removal thereof through the second openings, whereby the cover panels of the cover system e.g. can be reconfigured to be stowed flat adjacent the backrests of the row of vehicle seats upon folding of the second panel such that it rests parallel to the first panel.

According to a seventh aspect is provided that the first and the second retaining elements are integrally formed as a common retention unit, a respective of which common retention units are attachable at the respective guide rails such that the first retaining elements are positioned above the fourth openings.

The provision of the first and the second retaining elements being integrally formed as a common retention unit ensures a good structural integrity, cost efficient production and handling and further ensure correct positioning of the first and the second retaining elements in relation to each other. It will also be more economical in production, as only one element will have to be attached at the guide rails.

According to a eight aspect is provided that the first and second panels are foldable at the hinge portion such that their respective upper or back faces approach each other.

The provision of the first and second panels being foldable at the hinge portion, such that their respective upper or back faces approach each other, enable easy handling and storage of the cover following removal thereof from the guide rails, e.g. such that it can be placed flat onto the floor of the confined space.

According to an ninth aspect is provided that the first panel, the second panel, and the hinge portion are integrally formed.

The provision of a cover element, the first panel, the second panel, and the hinge portion of which are integrally formed provides for a cover element having good structural integrity which further may be produced economically and which does not require any assembly. According to a final aspect is provided a motor vehicle which comprises a cover system as above.

A vehicle which comprises a cover system as above is able to carry large or bulky loads, as the cover element can be stowed partially or fully or even removed and readily replaced following removal thereof. The cover system further provides to the vehicle flexibility in cover panels configurations, where the cover panels further are capable of sustaining some load thereupon without sagging.

### Brief description of the drawings

In the following, embodiments herein will be described in greater detail by way of example only with reference to attached drawings, in which
Fig. 1 is a schematic illustration of a motor vehicle which comprises a cover system according to embodiments herein.
Fig. 2 is a schematic view from above of a cover system according to embodiments herein.
Fig.3 is a schematic side view of a cover system according to embodiments herein in a fully closed position.
Fig. 4 is a schematic side view of a cover system according to embodiments herein in a partially open position.
Fig. 5 is a schematic side view of a cover system according to embodiments herein in a position where the cover is partially stowed behind the backrests of a row of vehicle seats.
Fig. 6 is a schematic side view of a cover system according to embodiments herein in a position where the cover is fully stowed behind the backrests of a row of vehicle seats.
Fig. 7 is a schematic side view of a cover system according to embodiments herein in a position where the cover is fully stowed flat upon the floor of the storage space.
Fig. 8 is a schematic side view of a cover system according to embodiments herein in a position where the cover is fully stowed flat upon the down folded backrests of the row of vehicle seats.
Fig. 9 is a schematic side view of a cover system according to embodiments herein in a position where the cover forms a shelf which is recessed into the storage space.
Fig. 10 is a schematic side view of a cover system according to embodiments herein in a position where the cover forms a box, enclosing a section of the storage space.

Still other objects and features of embodiments herein will become apparent from the following detailed description considered in conjunction with the accompanying drawings. It is to be understood, however, that the drawings are designed solely for purposes of illustration and not as a definition of the limits hereof, for which reference should be made to the appended claims. It should be further understood that the drawings are not necessarily drawn to scale and that, unless otherwise indicated, they are merely intended to conceptually illustrate the structures and procedures described herein.

### Description of embodiments

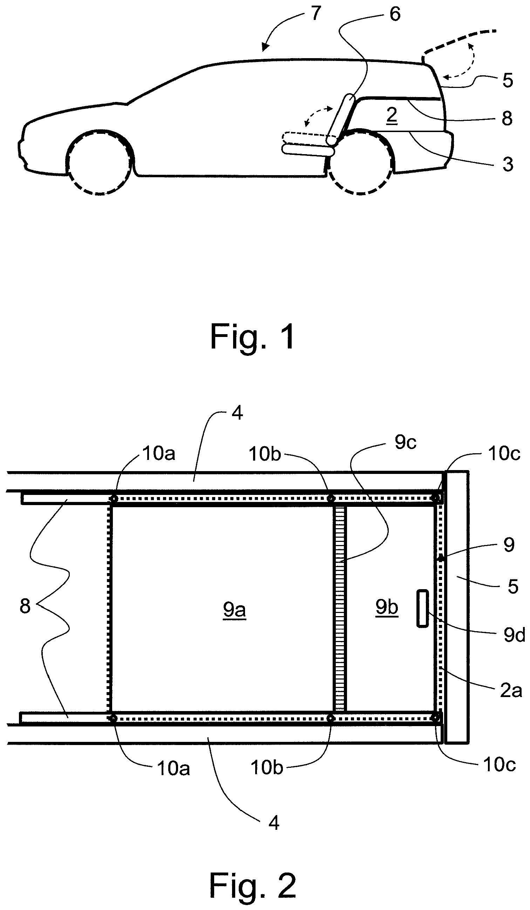

In overview, as illustrated in figure 1, embodiments herein relate to a cover system 1 for covering a confined space 2 open at the top 2a (illustrated in figure 2 by the dotted line), and delimited by a floor 3, a pair of side walls 4, a hatch 5 or door and one or more backrests 6 of a row of vehicle seats, particularly a luggage or trunk space of a motor vehicle 7.

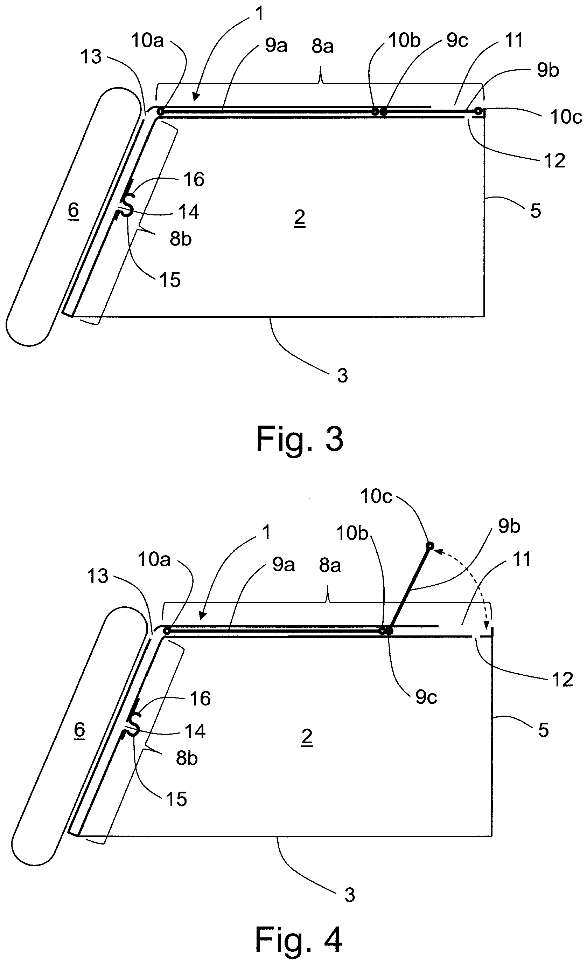

Thus, as illustrated in figure 2, the cover system 1 comprises a pair of parallel guide rails 8. These guide rails 8 are secured one to each side wall 4. A first section 8a of the respective guide rails 8 extends from the hatch 5, or if the hatch 5 is opened (as illustrated in dashed lines in figure 1) from the hatch opening, over the confined space 2 at the top thereof 2a. A second section 8b of the respective guide rails 8 continues, without interruption of a guide path thereof, further along the backrests 6 towards the floor 3 of the confined space 2. A cover element 9, include two panels 9a, 9b extending between the guide rails 8 and having several pairs of guide elements 10a, 10b, 10c at their ends slidably receivable therein. The two panels 9a, 9b are coupled to each other via a hinge portion 9c, that extends transversely between the guide rails 8. The combined size of the two panels 9a, 9b of the cover element 9, i.e. the area thereof, correspond to the area of the open top 2a of the confined space 2 between the guide rails 8. Further, as illustrated in figures 3 through 10, each guide rail 8 has a respective first opening 11, facing out of the confined space, for receipt / removal of the pairs of guide elements 10a, 10b, 10c adjacent the respective ends of the guide rails 8 at the hatch 5. In order to facilitate receipt / removal of the pairs of guide elements 10a, 10b, 10c, the extension of the respective first openings 11 along the guide rails should preferably be several times the extension of a respective one of the guide elements 10a, 10b, 10c.

The two panel 9a, 9b cover element 9, as illustrated in figure 3, being slidably receivable in guide rails 8, arranged as above, by guide elements 10a, 10b, 10c provides for a cover system 1 where the cover element 9 is readily removable from the vehicle 7, or positionable in the guide rails 8 such that the cover element 9 fully covers the confined space 2. The two panels 9a, 9b of the cover element 9 should be capable of sustaining some load thereupon without sagging. Thus, the respective panels 9a, 9b need to be rigid or only slightly flexible.

Further, as illustrated in figure 4, the provision of the respective first openings 11 and the hinge portion 9c, by which the two panels 9a, 9b are coupled to each other, enables selective partial opening of the cover element 9 through folding the second panel 9b upwardly, as illustrated by the dotted arrow, when the cover element 9 is held by the guide rails 8 above the top 2a of the confined space 2.

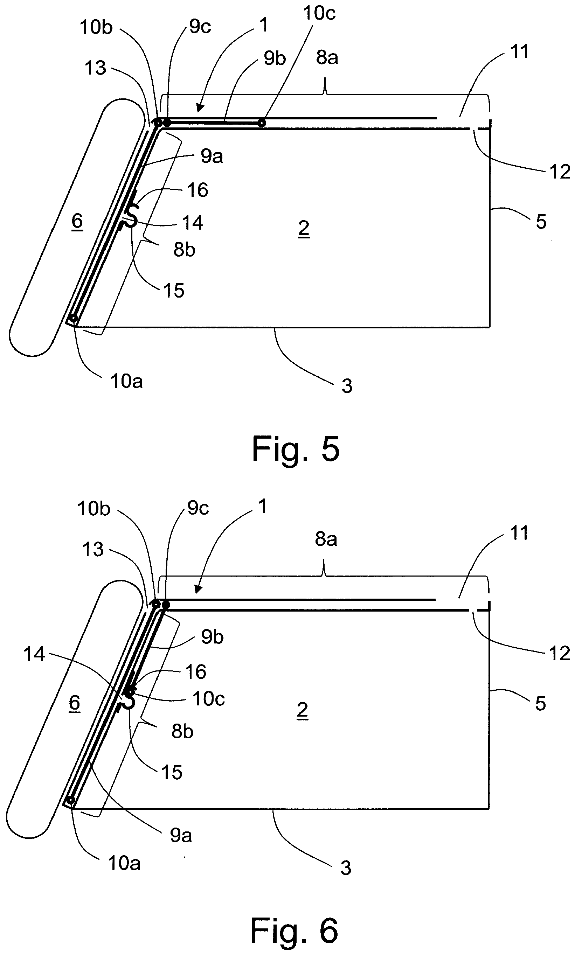

According to some embodiments herein the hinge portion 9c separate the two panels 9a, 9b such that the size of a first panel 9a corresponds to an area behind the backrests 6 between the second guide rail sections 8b. Having the first panel 9a correspond to the area behind the backrests 6 between the second guide rail sections 8b enables a further selective partial opening of the cover element, as illustrated in figure 5, through translating the cover element 9, when held by the guide rails 8, such that the first panel 9a becomes placed between the second guide rail sections 8b adjacent the backrests 6 of the vehicle seats. Hereby the top 2a of the confined space 2 will only be partially covered by the second panel 9b of the cover element 9.

According to some embodiments hereof the first panel 9a has a pair of first guide elements 10 a at respective corners thereof remote from the hinge portion 9c and a pair of second guide elements 10b at respective corners thereof adjacent the hinge portion 9c. The other, second panel 9b, has a pair of third guide elements 10c at respective corners thereof remote from the hinge portion 9c. As illustrated in figure 2, the first and second panels 9a, 9b of the cover element 9 are envisaged as substantially rectangular panels, thus having four corners each. However, it is also envisaged that the first and second panels 9a, 9b of the cover element 9 could assume other shapes, although the placement of the guide elements 10a, 10b, 10c would preferably be in correspondence with that of the preferred placement at rectangular first and second panels 9a, 9b, as described above.

Having the pairs of guide elements 10a, 10b, 10c arranged as above facilitates controlled translation of the cover element 9 along paths of the guide rails 8, when held by the guide rails 8. The arrangement of the guide elements 10a, 10b, 10c, as above, also allow for selective removal of the third pair of guide elements 10c, i.e. the guide elements 10c of the second panel 9b, trough the respective first openings 11 for partial opening of the cover element 9 through folding the second panel 9b upwardly, as illustrated in figure 4, when the cover element 9 is held by the guide rails 8 above the top 2a of the confined space 2.

According to further embodiments hereof each guide rail 8 has a respective second opening 12, facing in towards the confined space 2, for receipt / removal of one or more pairs of guide elements 10a, 10b, 10c adjacent the respective ends of the guide rails 8 at the hatch 5. The extension of the respective second openings 12 along the guide rails 8 should preferably be just slightly above the extension of a respective one of the guide elements 10a, 10b, 10c, in order to avoid unintentional removal of a pair of guide elements there through.

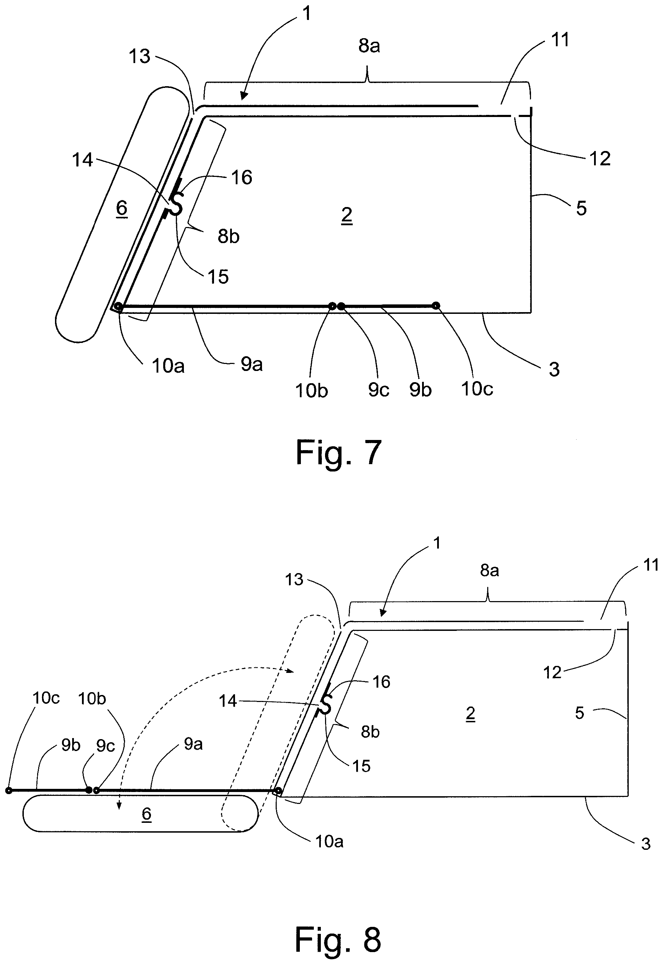

The second openings 12, as above, enables selective receipt / removal of one or more pairs of guide elements 10a, 10b, 10c there through, which facilitates flexible reconfiguration of the cover panels 9a, 9b of the cover system 1, such as folding of the second panel 9b, downwards, into the confined space 2, or alternatively the removal of the second and third guide elements 10b, 10c and subsequent translation of the first guide elements 10a to a position retained by the second guide rail sections 8b adjacent to the floor 3 of the confined space 2, whereby the panels 9a, 9b, as illustrated in figure 7, are stowed flat onto the floor 3 of the confined space 2, whilst being retained to the guide rails 8 by the fist guide elements 10a.

According to some embodiments herein each guide rail 8 has a respective third opening 13, facing out of the confined space 2, for receipt / removal of one or more pairs of guide elements 10a, 10b, 10c at ends of the second guide rail sections 8b adjacent the first guide rail sections 8a. As for the second openings 12, the extension of the respective third openings 13 along the guide rails 8 should preferably be just slightly above the extension of a respective one of the guide elements 10a, 10b, 10c, in order to avoid unintentional removal of a pair of guide elements there through.

These third openings 13, as above, enables selective receipt / removal of one or more pairs of guide elements 10a, 10b, 10c there through, which still further facilitates flexible reconfiguration of the cover panels 9a, 9b of the cover system 1, such as removal of the pair of second guide elements 10b and the pair of third guide elements 10c and subsequent folding of the panels 9a, 9b out over the backrests 6 of the row of vehicle seats, when these backrests 6 have been folded down to further increase the storage and cargo space of the vehicle 7, as illustrated in figure 8.

According to further embodiments herein each guide rail 8 has a respective fourth opening 14, facing in towards the confined space 2, for receipt / removal of a pair of guide elements 10a, 10b, 10c at the second guide rail sections. The respective fourth openings 14 should preferably be located near the center of the second guide rail sections 8b, but can be placed at arbitrary positions there along. As for the second and third openings 12, 13 the extension of the respective fourth openings 14 along the guide rails 8 should preferably be just slightly above the extension of a respective one of the guide elements 10a, 10b, 10c, in order to avoid unintentional removal of a pair of guide elements there through.

These fourth openings 14, as above, enables selective receipt / removal of one or more pairs of guide elements 10a, 10b, 10c there through, which facilitates still further flexible reconfiguration of the cover panels 9a, 9b of the cover system 1, such as a release of the pair of first guide elements 10a into the confined space 2.

According to still further embodiments herein each guide rail 8 has a respective first retaining element 15. These first retaining elements 15 are arranged to selectively receive and releasably retain a pair of guide elements 10a, removed through the fourth openings 14, in positions adjacent the sides of the second guide rail sections 8b facing in towards the confined space 2.

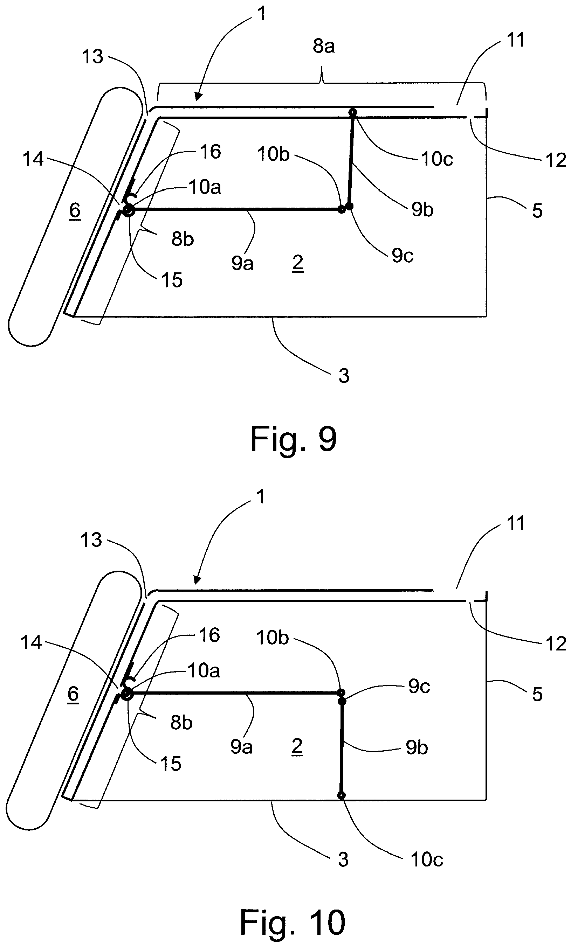

The first retaining elements 15, as above, enable retention of the pair of first guide elements 10a upon removal thereof through the fourth openings 14. Hereby the cover panels 9a, 9b of the cover system 1 can, e.g. be reconfigured to form a shelf, as illustrated in figure 9, through the pair of second guide elements 10b previously being released into the confined space 2a and the first panel 9a being suspended from the first guide rail sections 8a by the second panel 9b, which in turn is supported therein by the third guide elements 10c. For enabling the shelf configuration according to figure 9 the fourth openings 14 should preferably be located at the second guide rail sections 8b such that the first panel 9a is suspended parallel to the floor 3, i.e. horizontally. However, it is also possible to locate the fourth openings 14 such that the first panel 9a is suspended slightly slanting, if the geometry of the confined luggage or trunk space should so require.

Alternatively, the cover panels 9a, 9b of the cover system 1 can, as illustrated in figure 10, be reconfigured to form a box, through the pair of second guide elements 10b previously being released into the confined space 2 and the first panel 9a being supported at the floor 3 by the second panel 9b, which has been folded down towards the floor 3 along the hinge section 9c following removal of the third guide elements 10c into the confined space through the second openings 12. For enabling the box configuration according to figure 10 the fourth openings 14 should preferably be located at the second guide rail sections 8b such that the first panel 9a is suspended parallel to the floor 3, i.e. horizontally. Although figure 10 illustrates a first panel 9a as being supported at the floor 3 by a second panel 9b which is substantially vertical, it is also possible to locate the fourth openings 14 such that the second panel 9b supports the first panel 9a from a slightly slanting position, if the geometry of the confined luggage or trunk space should so require. Further, it is also possible to locate the fourth openings 14 such that the first panel 9a is supported slightly slanting, if the geometry of the confined luggage or trunk space should so require.

According to yet further embodiments herein each guide rail 8 has a respective second retaining element 16. These second retaining elements 16 are arranged to selectively receive and releasably retain a pair of guide elements 10c in positions adjacent sides of the second guide rail sections 8b facing in towards the confined space 2.

The second retaining elements 16, as above, enable retention of the pair of third guide elements 10c upon removal thereof through the second openings 12. Hereby the cover panels 9a, 9b of the cover system1 can, e.g. be reconfigured, as illustrated in figure 6, to be stowed flat adjacent the backrests 6 of the row of vehicle seats upon folding of the second panel 9b such that it rests against the backrests 6 parallel to, and flat against, the first panel 9a.

According to some further embodiments herein the first and second panels 9a, 9b are foldable at the hinge portion 9c such that their respective upper or back faces approach each other.

The first and second panels 9a, 9b being foldable at the hinge portion 9c, such that their respective upper or back faces approach each other, enable easy handling and storage of the cover 9 following removal thereof from the guide rails 8, e.g. such that it can folded into a sandwiched configuration, similar to that of figure 6, and placed flat onto the floor 3 of the confined space 2, or elsewhere.

According to some alternative embodiments herein the first panel 9a, the second panel 9b, and the hinge portion 9c are integrally formed.

A cover element where the first panel 9a, the second panel 9b, and the hinge portion 9c are integrally formed provides for a cover element 9 having good structural integrity, which further may be produced economically and which does not require any assembly.

In accordance with the present application is also envisaged a motor vehicle comprising a cover system as described in the foregoing.

A vehicle 7 which comprises a cover system 1, as above, is able to carry large or bulky loads, as the cover element 9 can be stowed partially or fully or even removed and readily replaced following removal thereof. The cover system 1 further provides to the vehicle 7 flexibility in cover panels 9a, 9b configurations, where the cover panels 9a, 9b further, due to their rigid or semi-rigid nature are capable of sustaining some load thereupon without sagging.

The above-described embodiments may be varied within the scope of the following claims.

Thus, while there have been shown and described and pointed out fundamental novel features of the embodiments herein, it will be understood that various omissions and substitutions and changes in the form and details of the devices illustrated, and in their operation, may be made by those skilled in the art. For example, it is expressly intended that all combinations of those elements and/or method steps which perform substantially the same function in substantially the same way to achieve the same results are equivalent. Moreover, it should be recognized that structures and/or elements and/or method steps shown and/or described in connection with any disclosed form or embodiment herein may be incorporated in any other disclosed or described or suggested form or embodiment as a general matter of design choice.

## Claims

1. System comprising a floor (3), a pair of side walls (4), a hatch (5) and one or more backrests (6) of a row of vehicle seats, delimiting a confined space (2) open at the top (2a) particularly a luggage or trunk space of a motor vehicle (7), and especially of a hatchback or station wagon automobile, the system further comprising a cover system (1) for covering the confined space comprising:
a pair of parallel guide rails (8) secured to each side wall (4), a first section (8a) of which guide rails (8) extends from the hatch (5) over the confined space (2) at the top (2a) and a second section (8b) of which guide rails (8) continues further along the backrests (6) towards the floor (3);
a cover element (9), including two panels (9a, 9b) extending between the guide rails (8) and having several pairs of guide elements (10a, 10b, 10c) at their ends slidably receivable therein,
where the two panels (9a, 9b) are coupled to each other via a hinge portion (9c) extending transversely between the guide rails (8), and
where the combined size of the two panels (9a, 9b) corresponds to the open top (2a) of the confined space (2) between the guide rails (8), and
where each guide rail (8) has a respective first opening (11), facing out of the confined space (2), for receipt / removal of the pairs of guide elements (10a, 10b, 10c) adjacent the respective ends of the guide rails (8) at the hatch (5);
the hinge portion (9c) separates the two panels (9a, 9b) such that the size of a first panel (9a) corresponds to an area behind the backrests (6) between the second guide rail sections (8b), and
the first panel (9a) has a pair of first guide elements (10a) at respective corners thereof remote from the hinge portion (9c) and a pair of second guide elements (10b) at respective corners thereof adjacent the hinge portion (9c), **characterized in that** the other, second panel (9b), has a pair of third guide elements (10c) at respective corners thereof remote from the hinge portion (9c).

2. System according to claim 1, **wherein** each guide rail (8) has a respective second opening (12), facing in towards the confined space (2), for receipt / removal of one or more pairs of guide elements (10a, 10b, 10c) adjacent the respective ends of the guide rails (8) at the hatch (5).

3. System according to any one of claims 1 to 2, **wherein** each guide rail (8) has a respective third opening (13), facing out of the confined space (2), for receipt / removal of one or more pairs of guide elements (10a, 10b, 10c) at ends of the second guide rail sections (8b) adjacent the first guide rail sections (8a).

4. System according to any one of claims 1 to 3, **wherein** each guide rail (8) has a respective fourth opening (14), facing in towards the confined space (2), for receipt / removal of a pair of guide elements (10a) at the second guide rail sections (8b).

5. System according to claim 4, **wherein** each guide rail (8) has a respective first retaining element (15), which first retaining elements (15) are arranged to selectively receive and releasably retain a pair of guide elements (10a), removed through the fourth openings (14), in positions adjacent the sides of the second guide rail sections (8b) facing in towards the confined space (2).

6. System according to any one of claims 1 to 5, **wherein** each guide rail (8) has a respective second retaining element (16), which second retaining elements (16) are arranged to selectively receive and releasably retain a pair of guide elements (10c) in positions adjacent sides of the second guide rail sections (8b) facing in towards the confined space (2).

7. System according to claim 6, **wherein** the first and the second retaining elements (15, 16) are integrally formed as a common retention unit (17), a respective of which common retention units (17) are attachable at the respective guide rails (8) such that the first retaining elements (15) are positioned above the fourth openings (14).

8. System according to any one of claims 1 to 7, **wherein** the first and second panels (9a, 9b) are foldable at the hinge portion (9c) such that their respective upper or back faces approach each other.

9. System according to any one of claims 1 to 8, **wherein** the first panel (9a), the second panel (9b), and the hinge portion (9c) are integrally formed.

10. A motor vehicle (7) **characterized in that** it comprises a system according to any one of claims 1 to 9.

## Patentansprüche

1. System, das Folgendes umfasst
einen Boden (3), ein Paar Seitenwände (4), eine Heckklappe (5) und eine oder mehrere Rückenlehnen (6) einer Reihe von Fahrzeugsitzen, die einen oben (2a) geöffneten eingeschlossenen Raum (2), besonders einen Gepäck- oder Kofferraum eines Kraftfahrzeugs (7), und insbesondere eines Fließheck- oder Kombi-Kraftfahrzeugs, begrenzen, wobei das System weiterhin ein Abdeckungssystem (1) zum Abdecken des eingeschlossenen Raums umfasst, das Folgendes umfasst:
ein Paar paralleler Führungsschienen (8), die an jeder Seitenwand (4) gesichert sind, wobei sich ein erster Abschnitt (8a) der Führungsschienen (8) von der Heckklappe (5) oben (2a) über den eingeschlossenen Raum (2) erstreckt und wobei ein zweiter Abschnitt (8b) der Führungsschienen (8) entlang der Rückenlehnen (6) in Richtung des Bodens (3) weitergeführt wird;
ein Abdeckungselement (9), einschließend zwei Verkleidungen (9a, 9b), die sich zwischen den Führungsschienen (8) erstrecken und die mehrere Paare an Führungselementen (10a, 10b, 10c) aufweisen, die an ihren Enden gleitend aufnehmbar sind,
wobei die zwei Verkleidungen (9a, 9b) miteinander mittels eines Scharnierabschnitts (9c), der sich zwischen den Führungsschienen (8) quer erstreckt, gekoppelt sind, und
wobei die kombinierte Größe der zwei Verkleidungen (9a, 9b) dem offenen oberen Bereich (2a) des eingeschlossenen Raums (2) zwischen den Führungsschienen (8) entspricht, und
wobei jede Führungsschiene (8) ein jeweilige erste Öffnung (11), die aus dem geschlossenen Raum (2) hinaus orientiert ist, zum Aufnehmen / Entfernen der Paare an Führungselementen (10a, 10b, 10c) angrenzend an die entsprechenden Enden der Führungsschienen (8) an der Heckklappe (5) aufweist;
der Scharnierabschnitt (9c) die zwei Verkleidungen (9a, 9b) derart trennt, dass die Größe einer ersten Verkleidung (9a) einem Bereich hinter den Rückenlehnen (6) zwischen den zweiten Führungsschienenabschnitten (8b) entspricht, und
die erste Verkleidung (9a) ein Paar an ersten Führungselementen (10a) an jeweiligen Ecken derselben abseits des Scharnierabschnitts (9c) aufweist und ein Paar an zweiten Führungselementen (10b) an jeweiligen Ecken derselben an den Scharnierabschnitt (9c) angrenzend aufweist, **dadurch gekennzeichnet, dass**
die andere, zweite Verkleidung (9b) ein Paar an dritten Führungselementen (10c) an jeweiligen Ecken derselben abseits des Scharnierabschnitts (9c) aufweist.

2. System nach dem Anspruch 1, wobei jede Führungsschiene (8) zum Aufnehmen / Entfernen von einem oder mehreren Paaren an Führungselementen (10a, 10b, 10c) angrenzend an die jeweiligen Enden der Führungsschienen (8) an der Heckklappe (5) eine jeweilige zweite Öffnung (12) aufweist, die in Richtung des eingeschlossenen Raums (2) einwärts orientiert ist.

3. System nach einem beliebigen der Ansprüche 1 bis 2, wobei jede Führungsschiene (8) zum Aufnehmen / Entfernen von einem oder mehreren Paaren an Führungselementen (10a, 10b, 10c) angrenzend an die ersten Führungsschienenabschnitte (8a) an Enden der zweiten Führungsschienenabschnitte (8b) eine jeweilige dritte Öffnung (13) aufweist, die aus dem eingeschlossenen Raum (2) hinaus orientiert ist.

4. System nach einem beliebigen der Ansprüche 1 bis 3, wobei jede Führungsschiene (8) zum Aufnehmen / Entfernen eines Paares an Führungselementen (10a) an den zweiten Führungsschienenabschnitten (8b) eine in Richtung des eingeschlossenen Raums (2) einwärts orientierte vierte Öffnung (14) aufweist.

5. System nach dem Anspruch 4, wobei jede Führungsschiene (8) ein entsprechendes erstes Halteelement (15) aufweist, wobei die ersten Halteelemente (15) angeordnet sind, um wahlweise ein Paar an Führungselementen (10a), die durch die vierten Öffnungen (14) entfernt werden, in an die zum eingeschlossenen Raum (2) einwärts orientierten Seiten der zweiten Führungsschienenabschnitte (8b) angrenzenden Positionen aufzunehmen und lösbar zu halten.

6. System nach einem beliebigen der Ansprüche 1 bis 5, wobei jede Führungsschiene (8) ein entsprechendes zweites Halteelement (16) aufweist, wobei die zweiten Halteelemente (16) angeordnet sind, um wahlweise ein Paar an Führungselementen (10c) in Positionen, die an zum eingeschlossenen Raum (2) einwärts orientierten Seiten der zweiten Führungsschienenabschnitte (8b) angrenzen, aufzunehmen und lösbar zu halten.

7. System nach dem Anspruch 6, wobei die ersten und zweiten Halteelemente (15, 16) als eine gemeinsame Halteeinheit (17) in einem Stück gebildet sind, wobei die jeweiligen gemeinsamen Halteeinheiten (17) an den jeweiligen Führungsschienen (8) anfügbar sind, so dass die ersten Halteelemente (15) über den vierten Öffnungen (14) positioniert sind.

8. System nach einem beliebigen der Ansprüche 1 bis 7, wobei die ersten und zweiten Verkleidungen (9a, 9b) am Gelenkabschnitt (9c) klappbar sind, so dass sich ihre jeweiligen Ober- oder Rückenflächen aneinander annähern.

9. System nach einem beliebigen der Ansprüche 1 bis 8, wobei die erste Verkleidung (9a), die zweite Verkleidung (9b) und der Gelenkabschnitt (9c) in einem Stück gebildet sind.

10. Kraftfahrzeug (7), **dadurch gekennzeichnet, dass** es ein System nach einem beliebigen der Ansprüche 1 bis 9 umfasst.

## Revendications

1. Système comprenant un plancher (3), une paire de parois latérales (4), un hayon (5) et un ou plusieurs dossiers (6) d'une rangée de sièges d'automobile, délimitant un espace restreint (2) ouvert sur le dessus (2a), en particulier le compartiment à bagages ou coffre d'un véhicule à moteur (7), et spécialement un véhicule bicorps ou un break, le système comprenant en outre un système de couverture (1) pour couvrir l'espace restreint, comprenant :
une paire de rails de guidage (8) parallèles fixés sur chaque paroi latérale (4), une première section (8a) desdits rails de guidage (8) s'étendant depuis le hayon (5) en haut (2a) au-dessus de l'espace restreint (2) et une seconde section (8b) desdits rails de guidage (8) continuant plus loin le long des dossiers (6) vers le plancher (3) ;
un élément de couverture (9), comprenant deux panneaux (9a, 9b) s'étendant entre les rails de guidage (8) et comportant à leurs extrémités plusieurs paires d'éléments de guidage (10a, 10b, 10c) pouvant y être reçus coulissants,
dans lequel les deux panneaux (9a, 9b) sont accouplés l'un à l'autre via une partie de charnière (9c) s'étendant transversalement entre les rails de guidage (8), et
dans lequel la dimension combinée des deux panneaux (9a, 9b) correspond au sommet ouvert (2a) de l'espace restreint (2) entre les rails de guidage (8), et
dans lequel chaque rail de guidage (8) comporte une première ouverture (11) correspondante, tournant le dos à l'espace restreint (2), pour recevoir/retirer les paires d'éléments de guidage (10a, 10b, 10c) tout à côté des extrémités respectives des rails de guidage (8) au niveau du hayon (5) ;
dans lequel la partie de charnière (9c) sépare les deux panneaux (9a, 9b) de telle sorte que la dimension d'un premier panneau (9a) correspond à une zone derrière les dossiers (6) entre les secondes sections (8b) de rail de guidage, et
dans lequel le premier panneau (9a) comporte une paire de premiers éléments de guidage (10a) au niveau de ses coins respectifs éloignés de la partie de charnière (9c) et une paire de deuxièmes éléments de guidage (10b) au niveau de ses coins respectifs adjacents à la partie de charnière (9c),
**caractérisé en ce que** l'autre, le second panneau (9b) comporte une paire de troisièmes éléments de guidage (10c) au niveau de ses coins respectifs éloignés de la partie de charnière (9c).

2. Système selon la revendication 1, dans lequel chaque rail de guidage (8) comporte une deuxième ouverture (12) correspondante, tournée vers l'espace restreint (2), pour recevoir/retirer une ou plusieurs paires d'éléments de guidage (10a, 10b, 10c) tout à côté des extrémités respectives des rails de guidage (8) au niveau du hayon (5).

3. Système selon la revendication 1 ou 2, dans lequel chaque rail de guidage (8) comporte une troisième ouverture (13) correspondante, tournant le dos à l'espace restreint (2), pour recevoir/retirer une ou plusieurs paires d'éléments de guidage (10a, 10b, 10c) aux extrémités des secondes sections (8b) de rail de guidage adjacentes aux premières sections (8a) de rail de guidage.

4. Système selon l'une quelconque des revendications 1 à 3, dans lequel chaque rail de guidage (8) comporte une quatrième ouverture (14) correspondante, tournée vers l'espace restreint (2), pour recevoir/retirer une paire d'éléments de guidage (10a) au niveau des secondes sections (8b) de rail de guidage.

5. Système selon la revendication 4, dans lequel chaque rail de guidage (8) comporte un premier élément de retenue (15) correspondant, lesquels premiers éléments de retenue (15) sont agencés pour, de façon sélective, recevoir et retenir amovibles une paire d'éléments de guidage (10a), retirés par les quatrièmes ouvertures (14), dans des positions adjacentes aux côtés des secondes sections (8b) de rail de guidage tournées vers l'espace restreint (2).

6. Système selon l'une quelconque des revendications 1 à 5, dans lequel chaque rail de guidage (8) comporte un second élément de retenue (16) correspondant, lesquels seconds éléments de retenue (16) sont agencés pour, de façon sélective, recevoir et retenir amovibles une paire d'éléments de guidage (10c) dans des positions adjacentes aux côtés des secondes sections (8b) de rail de guidage tournées vers l'espace restreint (2).

7. Système selon la revendication 6, dans lequel les premiers et seconds éléments de retenue (15, 16) sont formés d'une seule pièce en tant qu'unité de retenue (17) commune, lesquelles unités de retenue (17) communes pouvant respectivement être fixées au niveau des rails de guidage (8) correspondants de telle sorte que les premiers éléments de retenue (15) sont placés au-dessus des quatrièmes ouvertures (14).

8. Système selon l'une quelconque des revendications 1 à 7, dans lequel les premier et second panneaux (9a, 9b) peuvent se replier au niveau de la partie de charnière (9c) de telle sorte que leurs faces supérieures ou leurs dos respectifs se rapprochent l'un de l'autre.

9. Système selon l'une quelconque des revendications 1 à 8, dans lequel le premier panneau (9a), le second panneau (9b), et la partie de charnière (9c) sont formés d'une seule pièce.

10. Véhicule à moteur (7), **caractérisé en ce qu'**il comprend un système selon l'une quelconque des revendications 1 à 9.
